# EUROPEAN PATENT SPECIFICATION

(11) **EP 1 467 085 B1**
(45) Date of publication and mention of the grant of the patent: **14.06.2006**
(21) Application number: 03008179.8
(22) Date of filing: 08.04.2003
(51) Int. Cl.: F02M 55/04, F02M 61/16

(54) **Metering device and method of assembling a metering device**
Dosiervorrichtung und Montageverfahren einer Dosiervorrichtung
Dispositif de dosage et son procédé d'assemblage

(43) Date of publication of application: 13.10.2004
(73) Proprietor: SIEMENS AKTIENGESELLSCHAFT, 80333 München (DE)
(72) Inventor: D'Arrigo, Angelo, 57123 Livorno (IT)

(56) References cited:
- EP-A- 1 275 841
- DE-A- 19 958 097
- US-A- 4 784 322
- US-B1- 6 311 950

## Description

The present invention relates to a metering device for dosing pressurized fluids, particularly an injection valve for a fuel injection system in an internal combustion engine, comprising a valve body comprising a fluid chamber for a pressurized fluid to be dosed, the fluid chamber terminating with a metering opening, a valve needle passing through at least a part of the fluid chamber, a lower end of the valve needle controlling opening and closing of the metering opening, and means for axially displacing the valve needle cooperating with an upper end of the valve needle.

The present invention further relates to a method of assembling a metering device for dosing pressurized fluids.

Metering devices of the above mentioned type are used for high-pressure direct-injection (HPDI) of gasoline into a combustion engine. A well defined injector performance is an essential requirement to HPDI injectors. This concerns for example the exact dosing of fuel and the exact injection time setting.

It has been experienced that during the HPDI injector duty cycle, pressure waves are generated in the injector, in particular due to the closing and opening action of the valve needle relative to its seat assy. As a result, pressure spikes occur in the injector that deteriorate the injector performance. In particular, since the flow through the metering opening is proportional to the pressure inside the injector, a pressure spike disturbs the metering and the delivering of the fuel.

According to prior art techniques, this problem is addressed by optimizing the internal injector geometry, especially the geometry of the fluid path. Since the fluid path inside of an injector is very sensitive to any changes, one has to observe a number of additional conditions, which makes it difficult not to adversely affect any injector properties.

US 6 311 950 B1 discloses metal bellows as a sealing element between two chambers. The bellows is fastened to the needle with its one end and to a plate welded to the housing with its other end and thus guiding the needle in its movement.

US 4 784 322 discloses an injector with tube or annular shaped bellows within a fluid chamber that are deformable in response to pressure changes. The bellows are closed and sealed by end caps at both ends and a spring is arranged inside the cavity. The bellows are mounted to a valve needle or arranged at an armature.

In view of the foregoing, it is an object of the present invention to provide an injector that absorbs pressure waves and is easy to produce.

This object is achieved by a metering device and according to a method of assembling a metering device according to the independent claims.

Advantageous embodiments of the present invention are mentioned in the dependent claims.

The present invention improves the metering device according to prior art in that at least one bellows is mounted in the fluid chamber, thereby defining a volume in the fluid chamber that is free of fluid to be dosed and hermetically sealed against the rest of the fluid chamber. Thereby, an accumulation and expansion zone is defined that can quickly absorb pressure waves. Since bellows with very small size are available, it is possible to install these components inside the fluid chamber without negative influence on the performance of the injector.

In the metering device according to the present invention, preferably, the means for axially displacing the valve needle comprise an armature carrying the valve needle. Injectors that are operated by exiting a magnetic coil include such an armature that is shifted due to a magnetic force. In these injector systems the provision of a bellows for pressure absorption is particularly advantageous.

In the metering device according to the present invention, further preferably, the at least one bellows is mounted to the armature. The shape of the armature can be adapted in order to provide a well-suited installing position for the bellows, particularly on the basis of only small changes to the injector geometry.

According to a further preferred embodiment the at least one bellows is mounted to the valve needle. This location of the bellows is useful, especially in the case that the armature has a shape that does not allow for mounting of a bellows.

Moreover, it is possible that the at least one bellows is mounted to the valve body.

In the metering device according to the present invention, preferably, the armature has an upper cylindrical portion with a first outer diameter and a lower cylindrical portion with a second outer diameter smaller than the first outer diameter and the at least one bellows is mounted to the armature so as to surround part of the lower cylindrical portion. Such a shape of the armature provides a well-suited geometry to mount the bellows, without largely influencing the further injector geometry. An armature that can be used for mounting the bellows so as to surround part of the lower cylindrical portion is obtained by only small changes to existing and well established armatures.

Related thereto, it is particularly advantageous that the at least one bellows has an upper flange hermetically fastened to a radially extending lower surface of the upper cylindrical portion and a lower flange hermetically fastened to an axially extending surface of the lower cylindrical portion. This fastening of the bellows under the "step" of the armature provides a very secure fixing position so that the further injector performance is not negatively influenced by the bellows.

It is particularly useful that the at least one bellows is welded to the armature. The bellows that is preferably made from stainless steel can be fixed by welding to the armature in a very secure manner so that compressible gas can be trapped inside the bellow.

In a preferred embodiment of the invention, the regions of the armature to which the bellows is hermetically fastened are not chrome plated. Whilst the armature is usually chrome plated in order to confer robustness to the surface of the armature, the regions to which the bellows is fastened are not chrome plated which provides favorable conditions for welding.

It is particularly advantageous that the volume defined by the bellows is filled with air. Thus, the installation of the bellows to the armature or to another component of the injector can be simply performed under natural atmosphere.

Depending on the particular characteristics of the injector valve, it can be preferable that the volume defined by the bellows is pressurized. Whether or not to pressurize the volume inside the bellows depends on the particular pressure conditions that are subject to being absorbed in accordance with the present invention.

The invention further relates to a method of assembling a metering device for dosing pressurized fluids, particularly an injection valve for a fuel injection system in an internal combustion engine, the metering device comprising a valve body comprising a fluid chamber for a pressurized fluid to be dosed, the fluid chamber terminating with a metering opening, a valve needle passing through at least a part of the fluid chamber, a lower end of the valve needle controlling opening and closing of the metering opening, and an armature carrying the valve needle, the armature having an upper cylindrical portion with a first outer diameter and a lower cylindrical portion with a second outer diameter smaller than the first outer diameter, the method comprising the steps of: placing a bellows over the lower cylindrical portion of the armature so as to surround it partly, hermetically fastening an upper flange of the bellows to a radially extending lower surface of the upper cylindrical portion and hermetically fastening a lower flange of the bellows to an axially extending surface of the lower cylindrical portion. In this way, the advantages of the metering device according to the present invention are also realized with respect to a method which also applies to the preferred embodiments of the method according to the present invention. In particular, a hermetic connection can be provided so as to provide a quick elastic accumulator/expansion function and thereby a pressure absorption.

The method according to the present invention is further advantageous in that the hermetically fastening is achieved by welding.

It is particularly advantageous that the step of placing the bellows over the lower cylindrical portion of the armature is performed after the valve needle has been mounted to the armature. Thus, the mounting of the valve needle to the armature is completely independent from the later installation of the bellows.

It is further particularly advantageous that the regions of the armature to which the bellows is hermetically fastened are not chrome plated.

The advantages gained by the technical features of the invention include
- an absorption of pressure waves that might deteriorate the injector performance;
- a simple mounting of the bellows to the armature that is already carrying the valve needle; and
- an assembly that has no negative influence on the injector performance.

The invention, both its construction and its method of operation together with additional objects and advantages thereof, will best be understood from the following description of specific embodiments when read in connection with the accompanying drawings, wherein
- Figure 1: illustrates a cross sectional view of a part of a metering device according to the present invention;
- Figure 2: illustrates two cross sectional views of armature/needle assemblies according to prior art;
- Figure 3: illustrates a side elevational view of an armature/needle assembly with a bellows according to the present invention;
- Figure 4: illustrates a cross sectional view of an armature/needle assembly with a bellows according to the present invention;
- Figure 5: illustrates a cross sectional view of an armature/bellows assembly according to the present invention;
- Figure 6: illustrates a cross sectional view of a further embodiment of a metering device according to the present invention; and
- Figure 7: is a flow chart illustrating a preferred embodiment of a method according to the present invention.

In the following description of preferred embodiments of the present invention similar reference numbers refer to similar or comparable components.

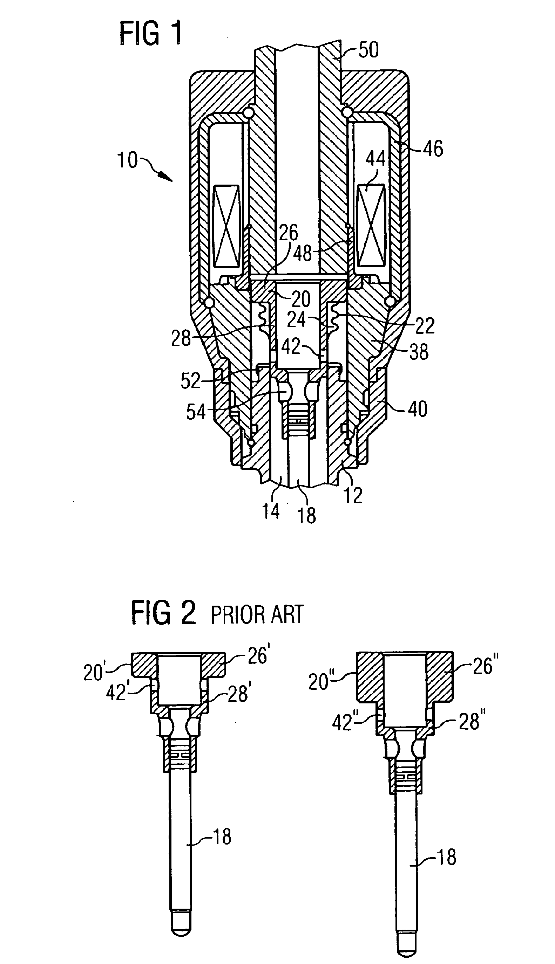

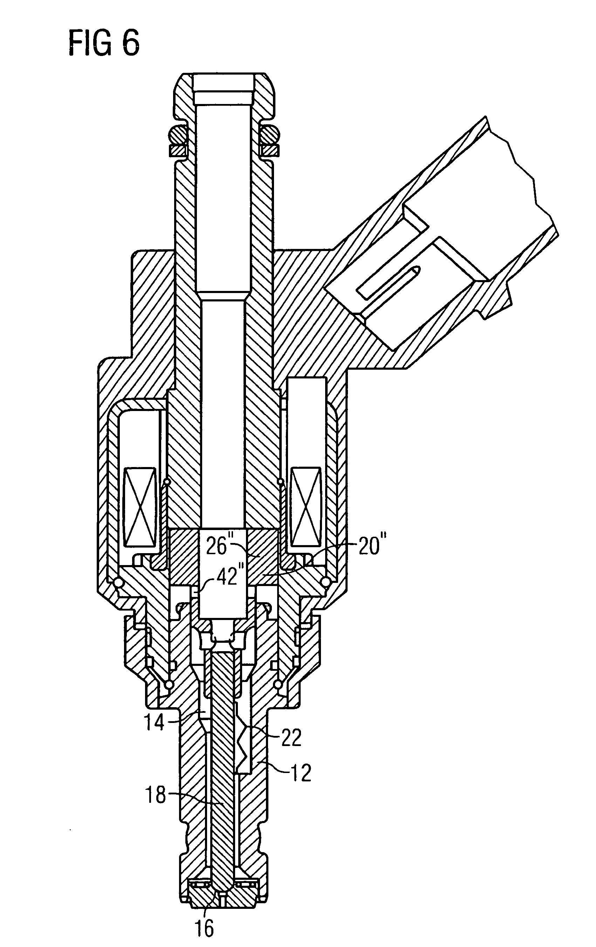

Figure 1 illustrates a cross sectional view of a part of a metering device according to the present invention. The injection valve 10 comprises of a valve body 12 that is partly surrounded by a valve body shell 38. Both components, the valve body 12 and the valve body shell 38 are held together by a plastic shell 40. By the valve body 12 and the valve body shell 38, the dimensions of a fluid chamber 14 are partly defined. Inside the fluid chamber 14, an armature 20 is provided to which a valve needle 18 is fixed. The valve needle 18 is fixed to the armature 20 at its upper end. The lower end of the valve needle 18 that is not shown in Figure 1 controls opening and closing of a metering opening (cf. Figure 6, metering opening 16). The armature comprises, besides further sections, an upper cylindrical portion 26 and a lower cylindrical portion 28. The lower cylindrical portion 28 is partly surrounded by a bellows 22 that is preferably made of metal and welded to the armature 20, thereby defining a hermetically sealed volume 24 between the bellows 22 and the armature 20. The armature 20 and the valve needle 18 are moveable in axial direction, the armature 20 being guided by the valve body shell and an upper guide eyelet 52 that is provided by the valve body 12. In the preferred embodiment according to Figure 1, an upper flange 30 of the bellows 22 is welded to a radially extending lower surface of the upper cylindrical portion 26 of the armature 20, and a lower flange 34 of the bellows 22 is welded to an axially extending surface 26 of the lower cylindrical portion 26 of the armature 20. The arrangement of the armature 20 and the bellows 22 considers that through holes 42 in the armature 20 are not blocked so that a fluid passage through the through holes 42 is possible. The hermetically sealed volume 24 between the armature 20 and the bellows 22 is preferably filled with air.

Further through holes 54 are provided that build a further part of the fluid passage.

Further components of the injection valve 10 according to Figure 1 are a magnetic coil 44 that is arranged inside a housing 46. The magnetic coil 44 surrounds a non-magnetic shell 48: Inside of the non-magnetic shell 48 an inlet tube 50 for the fluid to be dosed is provided.

In operation of the injection valve 10 according to the present invention, the fluid to be dosed is guided through the inlet tube 50 into the fluid chamber 14. The fluid is at high pressure and it fills the whole fluid chamber down to the metering opening (not shown, cf. Figure 6, metering opening 16). By exiting the magnetic coil 44, the armature 20 is shifted upwardly so that part of the fluid in the fluid chamber 14 can leave the fluid chamber 14 through the metering opening. By deexiting the magnetic coil 44, the metering opening is closed again.

According to the preferred embodiment described above, the bellows 22 is a metal component, most preferably a rolled part made from 316 stainless steel, that is commercially available. However, also different types of bellows can be used, e.g. hydro formed, welded, chemically deposited and electro deposited bellows. The bellows 22 can be realized as a longitudinally welded tube, a seamless welded tube or a tube formed from a rolled thin sheet. It could be a flanged or a dished part. As a further possibility it can be an extruded part. The bellows 22 can also be made by press forging, or it can be machined from a solid rod. In order to optimize the behavior of the bellows 22 at the presence of pressure waves, the bellows 22 can also have different material thicknesses along its axial extension. Furthermore, the bellows 22 can be built from different materials. It is also possible to assemble two or more parts in order to realize the bellows 22. The fixing of the bellows 22 can be achieved, besides of welding, by furnace brazing and gluing. In any case, it is preferable that the armature zones where the bellows 22 is fixed are not chrome plated.

The operation of the injection valve 10 leads to pressure waves inside the injector, in particular due to the closing and opening action of the valve needle 18 relative to the needle seat assy at the metering opening. These pressure "spikes" or "peaks" are consistent and repeatable, and they deteriorate the performance of the injection valve 10. However, due to the presence of the bellows that is mounted to the armature 20 and that defines an air-filled hermetically sealed volume 24 inside the fluid chamber 14, theses pressure waves can be considerably reduced.

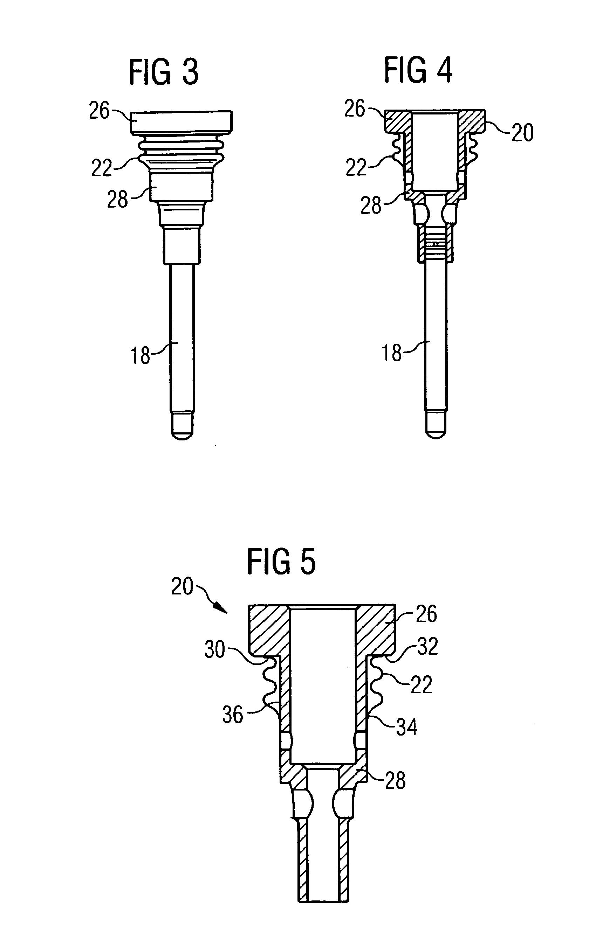

Figure 2 illustrates two cross sectional views of armature/needle assemblies according to prior art. Two prior art assemblies of an armature 20', 20" and a valve needle 18 are shown. The armatures 20', 20'' have an upper cylindrical portion 26', 26" and a lower cylindrical portion 28', 28'', in addition to further portions. In both armatures 20' and 20'', the through holes 42', 42'' are located directly beneath the upper cylindrical portion 26', 26''. This location of the through holes 42', 42'' does not allow a mounting of a bellows 22 as described above with reference to Figure 1. However, only slight changes to the armature and/or the location of the through holes 42 is required, in order to be able to realize the preferred embodiment according to the present invention, as shown in Figure 1. This is described with reference to Figure 3 and Figure 4 below.

Figure 3 illustrates a side elevational view of an armature/needle assembly with a bellows according to the present invention. Figure 4 illustrates a cross sectional view of an armature/needle assembly with a bellows according to the present invention. From Figure 4 it is obvious that there is a larger distance between the upper cylindrical portion 26 and the through holes 42 than in the prior art embodiments according to Figure 2. Thereby, a sufficient space around the lower cylindrical portion 28 of the armature is provided to which the bellows 22 can be mounted, directly beneath the upper cylindrical portion 26. Thus, the present invention can be realized in injector constructions as used in prior art, because only small changes have to be performed to the armature 20 and no changes have to be performed with respect to the rest of the equipment.

Figure 5 illustrates a cross sectional view of an armature bellows assembly according to the present invention. The fixing locations of the bellows 22 to the armature 20 are shown more precisely. An upper flange 30 of the bellows 22 is fixed to a radially extending lower surface 32 of the upper cylindrical portion 26 of the armature 20, and a lower flange 34 of the bellows 22 is fixed to an axially extending surface 36 of the lower cylindrical portion 28 of the armature 20.

Figure 6 illustrates a cross sectional view of a further embodiment of a metering device according to the present invention. In this embodiment, an armature 20 according prior art (cf. Figure 2) is used. Thus, due to the location of the through holes 42'' for the fluid passage, there is not enough space beneath the upper cylindrical portion 26" of the armature 20'' in order to install a bellows 22. However, the present invention is not limited to installing the bellows 22 to the armature 20. Another possibility is to install the bellows 22 directly to the valve needle 18. Also, this assembly provides for shock absorption.

There are still further possibilities of mounting the bellows which are not explicitly shown in the drawings. For example, it would also be possible to mount a bellows to the inner wall of the valve body 12, thereby also creating a hermetically sealed volume inside the fluid chamber 14.

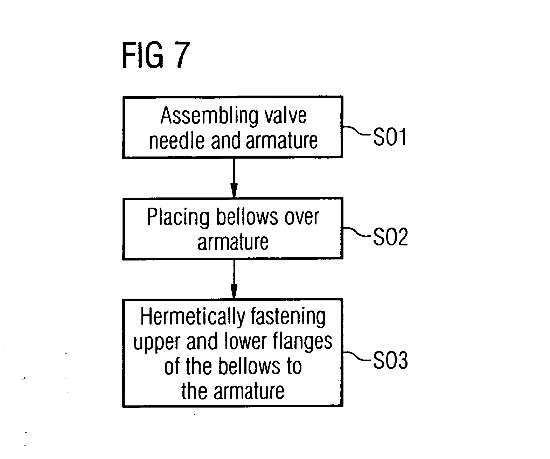

Figure 7 is a flow chart illustrating a preferred embodiment of a method according to the present invention. After assembling of the valve needle and the armature in a manner that is known from prior art (S01), a bellows is placed over the armature, in particular over a lower cylindrical portion of the armature (S02). Thereafter, the upper and lower flanges of the bellows are hermetically fastened to the armature (S03).

The present invention can be summarized as follows: During the duty cycle of an injection valve 10, pressure waves are generated inside the fluid chamber 14 of the injection valve 10 that deteriorate the operation of the injection valve 10. In order to absorb these pressure waves, a bellows 22 is mounted in the fluid chamber 14, thereby defining a volume 24 in the fluid chamber 14 that is free of the fluid to be dosed and hermetically sealed against the rest of the fluid chamber 14. Thus, a compensatory component is provided that can easily be mounted to an armature 20 of the injection valve 10 after the valve needle 18 has been mounted to the armature 20. Only minimum influence on the construction and the assembling process is required in order to realize the present invention.

The features disclosed in the foregoing description, in the drawings, and in the claims may alone as well as in any possible combination be important for the realization of the invention.

## Claims

1. A metering device for dosing pressurized fluids, particularly an injection valve (10) for a fuel injection system in an internal combustion engine, comprising
- a valve body (12) comprising a fluid chamber (14) for a pressurized fluid to be dosed, the fluid chamber (14) terminating with a metering opening (16),
- a valve needle (18) passing through at least a part of the fluid chamber, a lower end of the valve needle (18) controlling opening and closing of the metering opening (16),
- means (20) for axially displacing the valve needle cooperating with an upper end of the valve needle (18), and
- at least one bellows (22) with an upper flange (30) and a lower flange (34) is mounted in the fluid chamber (14), thereby defining a volume (24) in the fluid chamber (14) that is free of the fluid to be dosed and hermetically sealed against the rest of the fluid chamber (14)
**characterized in that**
the at least one bellows (22) is mounted with the upper flange (30) and the lower flange (34) to the same part in the fluid chamber.

2. The metering device according to claim 1,
**characterized in that**
the means for axially displacing the valve needle comprise an armature (20) carrying the valve needle (18).

3. The metering device according to claim 2,
**characterized in that**
the at least one bellows (22) is mounted to the armature (20).

4. The metering device according to any of the preceding claims,
**characterized in that**
the at least one bellows (22) is mounted to the valve needle (18).

5. The metering device according to any of the preceding claims,
**characterized in that**
the at least one bellows (22) is mounted to the valve body (12).

6. The metering device according to any of claims 3 to 5,
**characterized in that**
- the armature (20) has an upper cylindrical portion (26) with a first outer diameter and a lower cylindrical portion (28) with a second outer diameter smaller than the first outer diameter and
- the at least one bellows (22) is mounted to the armature (20) so as to surround part of the lower cylindrical portion (28).

7. The metering device according to claim 6,
**characterized in that**
the at least one bellows (22) is hermetically fastened with the upper flange (30) to a radially extending lower surface (32) of the upper cylindrical portion (26) and hermetically fastened with the lower flange (34) to an axially extending surface (36) of the lower cylindrical portion (28).

8. The metering device according to claim 7,
**characterized in that**
the at least one bellows (22) is welded to the armature (20).

9. The metering device according to claim 6 or 7,
**characterized in that**
the regions of the armature (20) to which the bellows (22) is hermetically fastened are not chrome plated.

10. The metering device according to any of the preceding claims,
**characterized in that**
the volume (24) defined by the bellows (22) is filled with air.

11. The metering device according to any of the preceding claims,
**characterized in that**
the volume (24) defined by the bellows (22) is pressurized.

12. A method of assembling a metering device for dosing pressurized fluids, particularly an injection valve (10) for a fuel injection system in an internal combustion engine, the metering device comprising
- a valve body (12) comprising a fluid chamber (14) for a pressurized fluid to be dosed, the fluid chamber (14) terminating with a metering opening (16),
- a valve needle (18) passing through at least a part of the fluid chamber (14), a lower end of the valve needle (18) controlling opening and closing of the metering opening (16), and
- an armature (20) carrying the valve needle (18), the armature (20) having an upper cylindrical portion (26) with a first outer diameter and a lower cylindrical portion (28) with a second outer diameter smaller than the first outer diameter,
the method comprising the steps of:
- placing a bellows (22) over the lower cylindrical portion (28) of the armature (20) so as to surround it partly,
- hermetically fastening an upper flange (30) of the bellows (22) to a radially extending lower surface of the upper cylindrical portion (26), and
- hermetically fastening a lower flange (34) of the bellows (22) to an axially extending surface of the lower cylindrical portion (28).

13. The method according to claim 12,
**characterized in that**
the hermetically fastening is achieved by welding.

14. The method according to claim 12 or 13,
**characterized in that**
the step of placing the bellows (22) over the lower cylindrical portion (28) of the armature (20) is performed after the valve needle (18) has been mounted to the armature (20).

15. The method according to any of claims 12 to 14,
**characterized in that**
the regions of the armature (20) to which the bellows (22) is hermetically fastened are not chrome plated.

## Patentansprüche

1. Dosiervorrichtung zum Dosieren von unter Druck stehenden Strömungsmitteln, insbesondere Einspritzventil (10) für ein Kraftstoffeinspritzsystem in einem Verbrennungsmotor, mit
- einem Ventilkörper (12), der eine Strömungmittelkammer (14) für ein zu dosierendes unter Druck stehendes Strömungsmittel aufweist, die mit einer Dosieröffnung (16) endet,
- einer Ventilnadel (18), die sich durch mindestens einen Teil der Strömungsmittelkammer erstreckt, wobei ein unteres Ende der Ventilnadel (18) das Öffnen und Schließen der Dosieröffnung (16) steuert,
- einer Einrichtung (20) zum axialen Verschieben der Ventilnadel, die mit einem oberen Ende der Ventilnadel (18) zusammenwirkt, und
- mindestens einem Balg (22) mit einem oberen Flansch (30) und einem unteren Flansch (34), der in der Strömungsmittelkammer (14) montiert ist und auf diese Weise ein Volumen (24) in der Strömungsmittelkammer (14) bildet, das frei von dem zu dosierenden Strömungsmittel und hermetisch gegenüber dem Rest der Strömungsmittelkammer (14) abgedichtet ist,
**dadurch gekennzeichnet, daß** der mindestens eine Balg (22) mit dem oberen Flansch (30) und dem unteren Flansch (34) am gleichen Teil in der Strömungsmittelkammer montiert ist.

2. Dosiervorrichtung nach Anspruch 1, **dadurch gekennzeichnet, daß** die Einrichtung zum axialen Verschieben der Ventilnadel einen Anker (20) umfaßt, der die Ventilnadel (18) trägt.

3. Dosiervorrichtung nach Anspruch 2, **dadurch gekennzeichnet, daß** der mindestens eine Balg (22) am Anker (20) montiert ist.

4. Dosiervorrichtung nach einem der vorangehenden Ansprüche, **dadurch gekennzeichnet, daß** der mindestens eine Balg (22) an der Ventilnadel (18) montiert ist.

5. Dosiervorrichtung nach einem der vorangehenden Ansprüche, **dadurch gekennzeichnet, daß** der mindestens eine Balg (22) am Ventilkörper (12) montiert ist.

6. Dosiervorrichtung nach einem der Ansprüche 3 bis 5, **dadurch gekennzeichnet, daß**
- der Anker (20) einen oberen zylindrischen Abschnitt (26) mit einem ersten Außendurchmesser und einen unteren zylindrischen Abschnitt (28) mit einem zweiten Außendurchmesser, der geringer ist als der erste Außendurchmesser, besitzt und
- der mindestens eine Balg (22) so am Anker (20) montiert ist, daß er einen Teil des unteren zylindrischen Abschnittes (28) umgibt.

7. Dosiervorrichtung nach Anspruch 6, **dadurch gekennzeichnet, daß** der mindestens eine Balg (22) mit dem oberen Flansch (30) hermetisch abgedichtet an einer radial verlaufenden unteren Fläche (32) des oberen zylindrischen Abschnittes (26) und mit dem unteren Flansch (34) hermetisch abgedichtet an einer axial verlaufenden Fläche (36) des unteren zylindrischen Abschnittes (28) befestigt ist.

8. Dosiervorrichtung nach Anspruch 7, **dadurch gekennzeichnet, daß** der mindestens eine Balg (22) mit dem Anker (20) verschweißt ist.

9. Dosiervorrichtung nach Anspruch 6 oder 7, **dadurch gekennzeichnet, daß** die Bereiche des Ankers (20), an denen der Balg (22) hermetisch abgedichtet befestigt ist, nicht chromplattiert sind.

10. Dosiervorrichtung nach einem der vorangehenden Ansprüche, **dadurch gekennzeichnet, daß** das vom Balg (22) gebildete Volumen (24) mit Luft gefüllt ist.

11. Dosiervorrichtung nach einem der vorangehenden Ansprüche, **dadurch gekennzeichnet, daß** das vom Balg (22) gebildete Volumen (24) unter Druck steht.

12. Verfahren zum Zusammenbauen einer Dosiervorrichtung zum Dosieren von unter Druck stehenden Strömungsmitteln, insbesondere eines Einspritzventils (10) für ein Kraftstoffeinspritzsystem in einem Verbrennungsmotor, wobei die Dosiervorrichtung umfaßt:
- einen Ventilkörper (12), der eine Strömungsmittelkammer (14) für ein zu dosierendes unter Druck stehendes Strömungsmittel aufweist, die mit einer Dosieröffnung (16) endet,
- eine Ventilnadel (18), die sich durch mindestens einen Teil der Strömungsmittelkammer (14) erstreckt, wobei ein unteres Ende der Ventilnadel
- (18) das Öffnen und Schließen der Dosieröffnung (16) steuert, und
- einen Anker (20), der die Ventilnadel (18) trägt und einen oberen zylindrischen Abschnitt (26) mit einem ersten Außendurchmesser sowie einen unteren zylindrischen Abschnitt (28) mit einem zweiten Außendurchmesser, der geringer ist als der erste Außendurchmesser, aufweist,
wobei das Verfahren die folgenden Schritte umfaßt:
- Anordnen eines Balges (22) über dem unteren zylindrischen Abschnitt (28) des Ankers (20), so daß er diesen teilweise umgibt,
- hermetisch abgedichtetes Befestigen eines oberen Flansches (30) des Balges (22) an einer sich radial erstreckenden unteren Fläche des oberen zylindrischen Abschnittes (26) und
- hermetisch abgedichtetes Befestigen eines unteren Flansches (34) des Balges (22) an einer sich axial erstreckenden Fläche des unteren zylindrischen Abschnittes (28)

13. Verfahren nach Anspruch 12, **dadurch gekennzeichnet, daß** die hermetisch abgedichtete Befestigung durch Schweißen erzielt wird.

14. Verfahren nach Anspruch 12 oder 13, **dadurch gekennzeichnet, daß** der Schritt des Anordnens des Balges (22) über dem unteren zylindrischen Abschnitt (28) des Ankers (20) durchgeführt wird, nachdem die Ventilnadel (18) am Anker (20) montiert worden ist.

15. Verfahren nach einem der Ansprüche 12 bis 14, **dadurch gekennzeichnet, daß** die Bereiche des Ankers (20), an denen der Balg (22) hermetisch abgedichtet befestigt wird, nicht chromplattiert werden.

## Revendications

1. Dispositif de mesure pour doser des fluides pressurisés, particulièrement une soupape (10) d'injection pour un système d'injection de carburant dans un moteur à combustion interne, comprenant
- un corps (12) de soupape comprenant une chambre (14) à fluide pour un fluide pressurisé devant être dosé, la chambre (14) à fluide se terminant avec une ouverture (16) de mesure,
- une aiguille (18) de soupape passant au travers au moins une partie de la chambre à fluide, une extrémité inférieure de l'aiguille (18) de soupape commandant une ouverture et une fermeture de l'ouverture (16) de mesure,
- un moyen (20) pour déplacer axialement l'aiguille de soupape coopérant avec une extrémité supérieure de l'aiguille (18) de soupape, et
- au moins un soufflet (22) avec une collerette (30) supérieure et une collerette (34) inférieure est montée dans la chambre (14) à fluide, définissant ainsi un volume (24) dans la chambre (14) à fluide qui est libre de fluide devant être dosé et étanche hermétiquement par rapport au reste de la chambre (14) à fluide
**caractérisé en ce que**
le au moins un soufflet (22) est monté avec la collerette (30) supérieure et la collerette (34) inférieure sur la même partie dans la chambre à fluide.

2. Dispositif de mesure selon la revendication 1, **caractérisé en ce que**
le moyen pour déplacer axialement l'aiguille de soupape comprend une armature (20) portant l'aiguille (18) de soupape.

3. Dispositif de mesure selon la revendication 2, **caractérisé en ce que**
le au moins un soufflet (22) est monté sur l'armature (20).

4. Dispositif de mesure selon l'une quelconque des revendications précédentes, **caractérisé en ce que**
le au moins un soufflet (22) est monté sur l'aiguille (18) de soupape.

5. Dispositif de mesure selon l'une quelconque des revendications précédentes, **caractérisé en ce que**
le au moins un soufflet (22) est monté sur le corps (12) de soupape.

6. Dispositif de mesure selon l'une quelconque des revendications 3 à 5, **caractérisé en ce que**
- l'armature (20) a une portion (26) cylindrique supérieure avec un premier diamètre externe et une portion (28) cylindrique inférieure avec un second diamètre externe plus petit que le premier diamètre externe et
- le au moins un soufflet (22) est monté sur l'armature (20) afin d'entourer une partie de la portion (28) cylindrique inférieure.

7. Dispositif de mesure selon la revendication 6, **caractérisé en ce que**
le au moins un soufflet (22) est attaché hermétiquement avec la collerette (30) supérieure sur une surface (32) inférieure s'étendant radialement de la portion (26) cylindrique supérieure et attaché hermétiquement avec la collerette (34) inférieure sur une surface (36) s'étendant axialement de la portion (28) cylindrique inférieure.

8. Dispositif de mesure selon la revendication 7,
**caractérisé en ce que**
le au moins un soufflet (22) est soudé sur l'armature (20).

9. Dispositif de mesure selon la revendication 6 ou 7, **caractérisé en ce que**
les régions de l'armature (20) auxquelles le soufflet (22) est attaché hermétiquement ne sont pas chromées.

10. Dispositif de mesure selon l'une quelconque des revendications précédentes, **caractérisé en ce que**
le volume (24) défini par le soufflet (22) est rempli d'air.

11. Dispositif de mesure selon l'une quelconque des revendications précédentes, **caractérisé en ce que**
le volume (24) défini par le soufflet (22) est pressurisé.

12. Procédé d'assemblage d'un dispositif de mesure pour doser des fluides pressurisés, particulièrement une soupape (10) d'injection pour un système d'injection de carburant dans un moteur à combustion interne, le dispositif de mesure comprenant
- un corps (12) de soupape comprenant une chambre (14) à fluide pour un fluide pressurisé devant être dosé, la chambre (14) à fluide se terminant avec une ouverture (16) de mesure,
- une aiguille (18) de soupape passant au travers au moins une partie de la chambre (14) à fluide, une extrémité inférieure de l'aiguille (18) de soupape commandant une ouverture et une fermeture de l'ouverture (16) de mesure, et
- une armature (20) portant l'aiguille (18) de soupape, l'armature (20) ayant une portion (26) cylindrique supérieure avec un premier diamètre externe et une portion (28) cylindrique inférieure avec un second diamètre externe plus petit que le premier diamètre externe,
le procédé comprenant les étapes consistant à :
- placer un soufflet (22) sur la portion (28) cylindrique inférieure de l'armature (20) afin d'entourer cette dernière partiellement,
- attacher hermétiquement une collerette (30) supérieure du soufflet (22) sur une surface inférieure s'étendant radialement de la portion (26) cylindrique supérieure, et
- attacher hermétiquement une collerette (34) inférieure du soufflet (22) sur une surface s'étendant axialement de la portion (28) cylindrique inférieure.

13. Procédé selon la revendication 12, **caractérisé en ce que**
le fait d'attacher hermétiquement est obtenu par soudage.

14. Procédé selon la revendication 12 ou 13, **caractérisé en ce que**
l'étape consistant à placer le soufflet (22) sur la portion (28) cylindrique inférieure de l'armature (20) est réalisée après que l'aiguille (18) de soupape ait été montée sur l'armature (20).

15. Procédé selon l'une quelconque des revendications 12 à 14, **caractérisé en ce que**
les régions de l'armature (20) sur laquelle le soufflet (22) est attaché hermétiquement ne sont pas chromées.
